# EUROPEAN PATENT SPECIFICATION

(11) **EP 3 052 569 B1**
(45) Date of publication and mention of the grant of the patent: **16.08.2017**
(21) Application number: 14812293.0
(22) Date of filing: 30.09.2014
(51) Int. Cl.: C08L 77/00, C08L 77/06, C08L 77/12, C08L 79/00, C08L 79/08

(54) **REINFORCED POLYPHTHALAMIDE/POLY(PHENYLENE ETHER) COMPOSITION**
VERSTÄRKTE POLYPHTHALAMID/POLY(PHENYLENETHER)ZUSAMMENSETZUNG
COMPOSITION RENFORCÉE DE POLYPHTALAMIDE/ÉTHER DE POLY(PHÉNYLÈNE)

(30) Priority: 02.10.2013 US 201361885653 P; 27.11.2013 US 201361909534 P
(43) Date of publication of application: 10.08.2016
(73) Proprietor: SABIC Global Technologies B.V., 4612 PX Bergen op Zoom (NL)
(72) Inventor: HAGENAARS, Arno C., 4612PX Bergen op Zoom (NL); GRCEV, Snezana, 4612PX Bergen op Zoom (NL); FARRELL, Tony, 4612PX Bergen op Zoom (NL)
(74) Representative: Lang, Johannes
(86) International application number: PCT/IB2014/064966
(87) International publication number: WO 2015/049635

(56) References cited:
- WO-A1-2009/125315
- WO-A1-2014/138031
- US-A- 5 916 970
- US-A1- 2005 038 191
- US-A1- 2006 122 310
- US-A1- 2006 205 872
- US-A1- 2007 238 832
- US-A1- 2014 248 451

## Description

### BACKGROUND OF INVENTION

This application relates to polyphthalamide/poly(phenylene ether) blends and more particularly to reinforced polyphthalamide/poly(phenylene ether) blends.

Talc and/or clay filled poly(phenylene ether)/polyamide 66 (PPE/PA66) blends have been used in applications such as fuel filler caps for long time. The morphology of PPE/PA66 blends can be defined as "islands-and-sea" where PPE particles are the dispersed phase (as islands) and PA66 is the continuous phase (as sea). As a result, PPE/PA66 blends are commonly recognized in industry as modified nylons with superior performance such as higher heat resistance, better dimension stability, less warpage and sagging, and less moisture absorption. Yet due to the inherent nature of PA66, PPE/PA66 blends are also susceptible to moisture induced property changes such as reduction of flexural modulus and tensile strength as the moisture content in the nylon matrix increases. In some cases when the car design calls for a fuel filler flap with a large surface area , filled PPE/PA66 blends may result in earlier part failure due to deformation and warpage under normal usage conditions.

There is an ongoing need in the art for reinforced polyamide (nylon) blends with improved resistance to deformation and warpage.

### BRIEF DESCRIPTION OF THE INVENTION

The above-described and other drawbacks are alleviated by a reinforced composition comprising:
70 to 90 weight percent (wt%) of a compatibilized blend of polyamide 66, a polyphthalamide/aliphatic polyamide copolymer and a poly(phenylene ether) wherein said compatibilized blend is formed from a mixture of the polyamide 66, polyphthalamide/aliphatic polyamide copolymer, polyphenylene ether, and a functionalizing agent; and
10 to 30 wt% of talc, wollastonite, clay or a combination thereof,
   wherein the polyphthalamide/aliphatic polyamide copolymer has a melting point of 270 to 290 deg C and a glass transition temperature of 75 to 95 deg C (ISO 11357) and the copolymer is present in an amount of 15 to 30 weight percent based on the total weight of the composition.

In another embodiment a reinforced compatibilized composition comprises 20 to 30 wt% of a polyphenylene ether;
15 to 30 wt% of a polyphthalamide/aliphatic polyamide copolymer having a melting point of 270 to 290 deg C and a glass transition temperature of 75 to 95 deg C 25 to 35 wt% of a polyamide 66;
10 to 30 wt% of talc, wollastonite, clay, or a combination thereof.
In another embodiment a reinforced compatibilized composition comprises 22 to 23 wt% of a polyphenylene ether;
5 to 6 wt% of an impact modifier;
27 to 30 wt% of a polyamide 66;
20 to 22.5 wt% of a polyphthalamide/polyamide 66 copolymer wherein the copolymer has a melting point of 270 to 290 deg C and a glass transition temperature of 75 to 95 deg C according ISO11357; and
18 to 20 wt% of talc, wollastonite, clay, or a combination thereof.

Also disclosed herein are articles comprising the above mentioned compositions and methods of making the reinforced compositions.

### BRIEF DESCRIPTION OF THE FIGURES

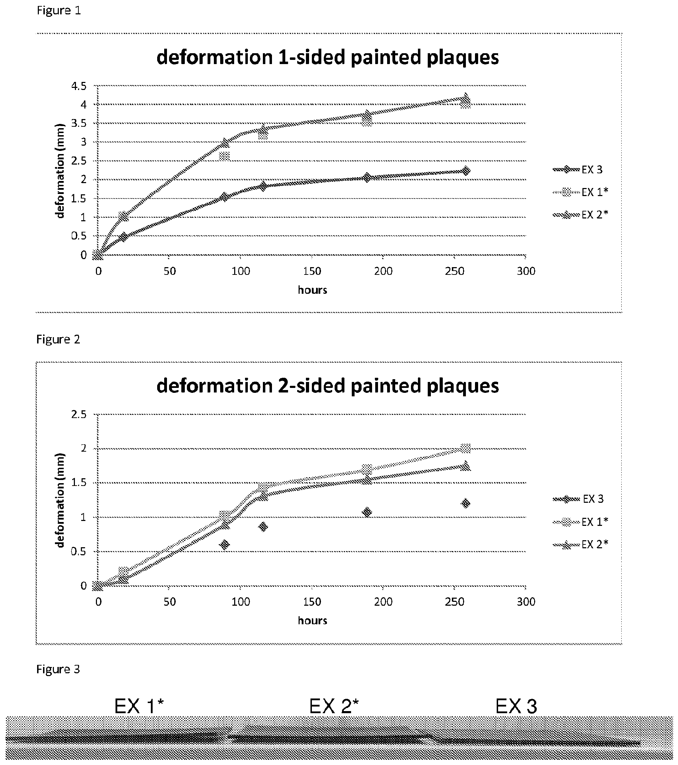

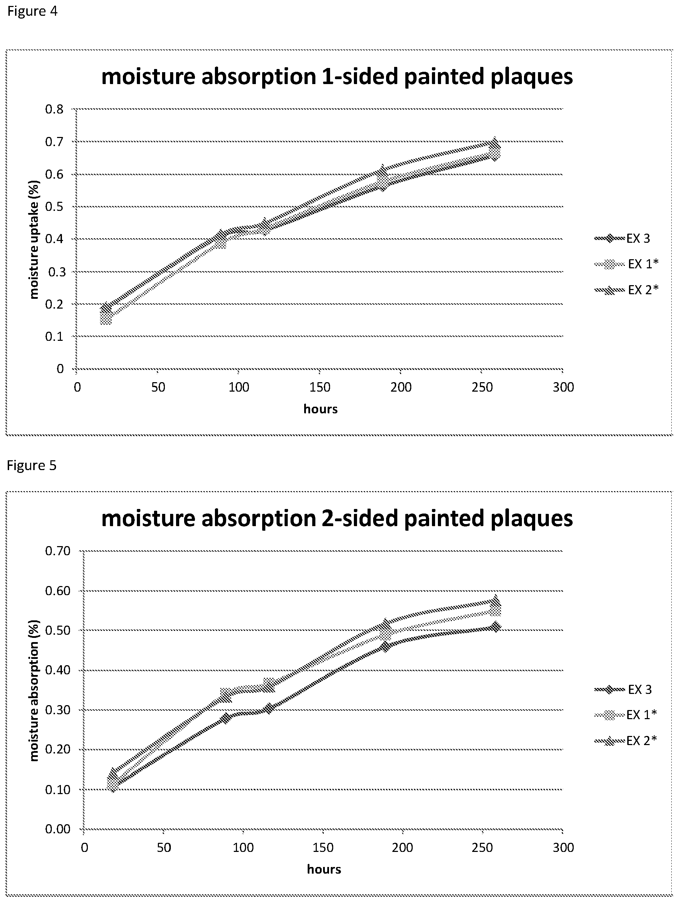

Figures 1, 2, 4 and 5 are graphical representations of the data from the examples. Figure 3 is a photograph of molded samples of the examples.

### DETAILED DESCRIPTION OF THE INVENTION

Automotive body parts such as fuel filler flaps require a combination of strength, ductility and a resistance to deformation over time. In the past, these needs have been met by reinforced PPE/PA 66 compositions. However, these compositions, when molded into slightly larger fuel filler flaps, show deformation over time, resulting in warpage and a poor fit with the body panel. Without being bound by theory it is believed that the reinforced PPE/PA 66 compositions, when painted and subjected to normal atmospheric conditions absorb moisture from the environment in an uneven manner which results in warpage and deformation. It is believed that since these articles are typically painted on only one side or painted with different thicknesses of paint on opposing sides there is a differential absorption of water in the thermoplastic composition, leading to deformation and warpage. Reinforced compositions comprising polyphenylene ether, aliphatic polyamide, and a polyphthalamide/aliphatic polyamide copolymer do not exhibit the same deformation or warpage under the same conditions. Surprisingly, this is despite having moisture uptake similar to filled PPE/PA 66 compositions which do not contain a polyphthalamide/aliphatic polyamide copolymer.

Polyamide resins, also known as nylons, are characterized by the presence of an amide group (-C(O)NH-), and are described in U.S. Patent No. 4,970,272. Polyamide 66 is produced through the reaction of hexmethylene diamine and adipic acid. Polyamide resins, such as polyamide 66, may be obtained by a number of well known processes such as those described in U.S. Patent Nos. 2,071,250; 2,071,251; 2,130,523; 2,130,948; 2,241,322; 2,312,966; 2,512,606; and 6,887,930. Polyamide 66 is commercially available from a wide variety of sources.

The polyamide 66 may have a relative viscosity of up to 6, or, more specifically, a relative viscosity of 1.89 to 5.43, or, even more specifically, a relative viscosity of 2.16 to 3.93. Relative viscosity is determined according to ISO307 in 96 wt% sulfuric acid.

In one embodiment, the polyamide 66 has an amine end group concentration greater than or equal to 35 microequivalents amine end group per gram of polyamide (µeq/g) as determined by titration with HCl. Within this range, the amine end group concentration may be greater than or equal to 40 µeq/g, or, more specifically, greater than or equal to 45 µeq/g. The maximum amount of amine end groups is typically determined by the polymerization conditions and molecular weight of the polyamide. Amine end group content may be determined by dissolving the polyamide in a suitable solvent, optionally with heat. The polyamide solution is titrated with 0.01 Normal hydrochloric acid (HCl) solution using a suitable indication method. The amount of amine end groups is calculated based the volume of HCl solution added to the sample, the volume of HCl used for the blank, the molarity of the HCl solution and the weight of the polyamide sample.

The amount of polyamide 66 can be 25 to 35 weight percent. Within this range, the polyamide may be present in an amount greater than or equal to 27 weight percent. Also within this range, the polyamide may be present in an amount less than or equal to 32 weight percent.

Polyphthalamide/aliphatic polyamide copolymers comprise repeating units having formula (I) 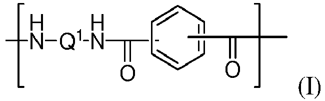 wherein Q¹ is independently at each occurrence a branched or unbranched alicyclic alkyl group having 4 to 8 carbons. In some embodiments, Q¹ is independently at each occurrence a 1,6-hexyl group. Polyamide resins, in general are characterized by the presence of an amide group (-C(O)NH-) which is the condensation product of a carboxylic acid and an amine. Polyphthalamides are the condensation product of terephthalic acid and an amine, isophthalic acid and an amine or a combination of terephthalic acid, isophthalic acid and an amine. The copolymer further comprises units of formula (II) 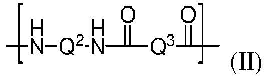 wherein Q² and Q³ are independently at each occurrence a branched or unbranched alicyclic alkyl group having 4 to 12 carbons. Q² and Q³ can be the same or different alicyclic alkyl group. In some embodiments Q² is a 1,6-hexyl group and Q³ is a 1,4-butyl group. The polyphthalamide/aliphatic polyamide copolymer can consist of units of formula I wherein Q¹ is a 1,6-hexyl group and units of formula II wherein Q² is a 1,6-hexyl group and Q³ is a 1,4-butyl group. In some embodiments it is preferable to have an amine end group content of greater than or equal to about 30 milliequivalents per gram (meq/g), or, more specifically, greater than or equal to about 40meq/g.

The polyphthalamide/aliphatic polyamide copolymer has a glass transition temperature (Tg) greater than or equal to 80°C, or, greater than or equal to 85°C. The polyphthalamide/aliphatic polyamide copolymer also has melting temperature (Tm) of 270 to 290°C. Within this range the Tm may be greater than or equal to 275°C.

The polyphthalamide/aliphatic polyamide copolymer is present in an amount of 10 to 30 weight percent based on the total weight of the composition. Within this range the amount of polyphthalamide/aliphatic polyamide copolymer can be greater than or equal to 15 weight percent, or, more specifically, greater than or equal to 20 weight percent. Also within this range the amount of polyphthalamide/aliphatic polyamide copolymer can be less than or equal to 25 weight percent.

The composition comprises a poly(phenylene ether). Poly(phenylene ether) comprises repeating structural units of formula (III) 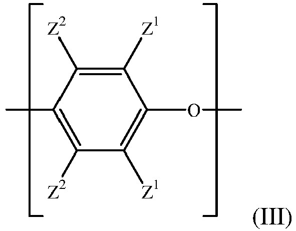 wherein for each structural unit, each Z¹ is independently halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each Z² is independently hydrogen, halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as "substituted", it can contain heteroatoms over and above the carbon and hydrogen members of the substituent residue. Thus, when specifically described as substituted, the hydrocarbyl residue can also contain halogen atoms, nitro groups, cyano groups, carbonyl groups, carboxylic acid groups, ester groups, amino groups, amide groups, sulfonyl groups, sulfoxyl groups, sulfonamide groups, sulfamoyl groups, hydroxyl groups, alkoxyl groups, or the like, and it can contain heteroatoms within the backbone of the hydrocarbyl residue.

The poly(phenylene ether) can comprise molecules having aminoalkyl-containing end group(s), typically located in an ortho position to the hydroxy group. Also frequently present are tetramethyl diphenylquinone (TMDQ) end groups, typically obtained from reaction mixtures in which tetramethyl diphenylquinone by-product is present.

The poly(phenylene ether) can be in the form of a homopolymer; a copolymer; a graft copolymer; an ionomer; or a block copolymer; as well as combinations comprising two or more of the foregoing polymers. Poly(phenylene ether) includes polyphenylene ether comprising 2,6-dimethyl-1,4-phenylene ether units optionally in combination with 2,3,6-trimethyl-1,4-phenylene ether units.

The poly(phenylene ether) can be prepared by the oxidative coupling of monohydroxyaromatic compound(s) such as 2,6-xylenol and/or 2,3,6-trimethylphenol. Catalyst systems are generally employed for such coupling; they can contain heavy metal compound(s) such as a copper, manganese or cobalt compound, usually in combination with various other materials such as a secondary amine, tertiary amine, halide or combination of two or more of the foregoing.

A portion of the poly(phenylene ether) can be functionalized with a polyfunctional compound (functionalizing agent) as described below. The poly(phenylene ether) can be functionalized prior to making the composition or can be functionalized as part of making the composition. Furthermore, prior to functionalization the poly(phenylene ether) can be extruded, for example to be formed into pellets. It is also possible for the poly(phenylene ether) to be melt mixed with other additives that do not interfere with functionalization. Exemplary additives of this type include s, flow promoters, and the like.

In some embodiments the poly(phenylene ether) can comprise 0.1 weight percent weight percent to 90 weight percent of structural units derived from a functionalizing agent, based on the total weight of the poly(phenylene ether). Within this range, the poly(phenylene ether) can comprise less than or equal to 80 weight percent, or, more specifically, less than or equal to 70 weight percent of structural units derived from functionalizing agent, based on the total weight of the poly(phenylene ether).

The poly(phenylene ether) can have a number average molecular weight of 3,000 to 40,000 grams per mole (g/mol) and a weight average molecular weight of 5,000 to 80,000 g/mol, as determined by gel permeation chromatography using monodisperse polystyrene standards, a styrene divinyl benzene gel at 40°C and samples having a concentration of 1 milligram per milliliter of chloroform. The poly(phenylene ether) or combination of poly(phenylene ether)s has an initial intrinsic viscosity of 0.1 to 0.60 deciliters per gram (dl/g), as measured in chloroform at 25°C. Initial intrinsic viscosity is defined as the intrinsic viscosity of the poly(phenylene ether) prior to melt mixing with the other components of the composition and final intrinsic viscosity is defined as the intrinsic viscosity of the poly(phenylene ether) after melt mixing with the other components of the composition. As understood by one of ordinary skill in the art the viscosity of the poly(phenylene ether) may be up to 30% higher after melt mixing. The percentage of increase can be calculated by (final intrinsic viscosity - initial intrinsic viscosity)/initial intrinsic viscosity. Determining an exact ratio, when two initial intrinsic viscosities are used, will depend somewhat on the exact intrinsic viscosities of the poly(phenylene ether) used and the ultimate physical properties that are desired.

The poly(phenylene ether) is present in an amount of 20 to 30 weight percent based on the total weight of the composition. Within this range the poly(phenylene ether) may be present in an amount greater than or equal to 22 weight percent. Also within this range the poly(phenylene ether) can be present in an amount of less than or equal to 25 weight percent.

The compatibilized blend is formed using a functionalizing agent. When used herein, the expression "functionalizing agent" refers to polyfunctional compounds which interact with the poly(phenylene ether), the polyphthalamide/aliphatic polyamide copolymer, the polyamide resin, or any combination thereof. This interaction may be chemical (e.g., grafting) and/or physical (e.g., affecting the surface characteristics of the dispersed phases). In either instance the resulting compatibilized polyphthalamide/poly(phenylene ether) composition appears to exhibit improved compatibility, particularly as evidenced by enhanced impact strength, mold knit line strength and/or elongation. As used herein, the expression "compatibilized polyphthalamide/poly(phenylene ether) blend" refers to those compositions which have been physically and/or chemically compatibilized with a functionalizing agent.

The functionalizing agent comprises a polyfunctional compound that is one of two types. The first type has in the molecule both (a) a carbon-carbon double bond and (b) at least one carboxylic acid, anhydride, epoxy, imide, amide, ester group or functional equivalent thereof. Examples of such polyfunctional compounds include maleic acid; maleic anhydride; fumaric acid; maleic hydrazide; dichloro maleic anhydride; and unsaturated dicarboxylic acids (e.g. acrylic acid, butenoic acid, methacrylic acid, t-ethylacrylic acid, pentenoic acid). In some embodiments, the functionalizing agent comprises maleic anhydride and/or fumaric acid.

The second type of polyfunctional functionalizing agent compounds are characterized as having both (a) a group represented by the formula (OR) wherein R is hydrogen or an alkyl, aryl, acyl or carbonyl dioxy group and (b) at least two groups each of which may be the same or different selected from carboxylic acid, acid halide, anhydride, acid halide anhydride, ester, orthoester, amide, imido, amino, and salts thereof. Typical of this type of functionalizing agents are the aliphatic polycarboxylic acids, acid esters and acid amides represented by the formula (IV):

(R^{I}O)ₘR(COOR^{II})ₙ(CONR^{III}R^{IV})ₛ (IV)

wherein R is a linear or branched chain saturated aliphatic hydrocarbon having 2 to 20, or, more specifically, 2 to 10 carbon atoms; R^{I} is hydrogen or an alkyl, aryl, acyl or carbonyl dioxy group having 1 to 10, or, more specifically, 1 to 6, or, even more specifically, 1 to 4 carbon atoms; each R^{II} is independently hydrogen or an alkyl or aryl group having 1 to 20, or, more specifically, 1 to 10 carbon atoms; each R^{III} and R^{IV} are independently hydrogen or an alkyl or aryl group having 1 to 10, or, more specifically 1 to 6, or, even more specifically, 1 to 4, carbon atoms; m is equal to 1 and (n + s) is greater than or equal to 2, or, more specifically, equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III} and R^{IV} cannot be aryl when the respective substituent has less than 6 carbon atoms.

Suitable polycarboxylic acids include, for example, citric acid, malic acid, agaricic acid; including the various commercial forms thereof, such as for example, the anhydrous and hydrated acids; and combinations comprising one or more of the foregoing. In some embodiments, the functionalizing agent comprises citric acid. Illustrative of esters useful herein include, for example, acetyl citrate and mono- and/or distearyl citrates and the like. Suitable amides useful herein include, for example, N,N'-diethyl citric acid amide; N-phenyl citric acid amide; N-dodecyl citric acid amide; N,N'-didodecyl citric acid amide and N-dodecyl malic acid. Derivates include the salts thereof, including the salts with amines and the alkali and alkaline metal salts. Exemplary suitable salts include calcium malate, calcium citrate, potassium malate, and potassium citrate.

In some embodiments the functionalizing agent comprises citric acid, maeic anhydride, fumaric acid or a combination thereof.

The foregoing functionalizing agents may be added directly to the melt blend or pre-reacted with either or both the poly(phenylene ether) and polyamide. In some embodiments, at least a portion of the functionalizing agent is pre-reacted, either in the melt or in a solution of a suitable solvent, with all or a part of the poly(phenylene ether). It is believed that such pre-reacting may cause the functionalizing agent to react with the polymer and, consequently, functionalize the poly(phenylene ether). For example, the poly(phenylene ether) may be pre-reacted with maleic anhydride, fumaric acid and/or citric acid to form an anhydride and/or acid functionalized poly(phenylene ether) which has improved compatibility with the polyamide compared to a non-functionalized poly(phenylene ether).

The amount of the functionalizing agent used will be dependent upon the specific functionalizing agent chosen and the specific polymeric system to which it is added.

In some embodiments, the functionalizing agent is employed in an amount of 0.05 to 2.0 weight percent, based on the total weight of the composition. Within this range the amount of functionalizing agent may be greater than or equal to 0.1, or, more specifically, greater than or equal to 0.2, or, more specifically, greater than or equal to 0.5 weight percent. Also within this range the amount of functionalizing agent may be less than or equal to 1.75, or, more specifically, less than or equal to 1.5 weight percent, or, more specifically less than or equal to 0.9 weight percent.

In some embodiments the functionalizing agent comprises citric acid and the citric acid is used in an amount of 0.2 to 2.0 weight percent, based on the total weight of the composition,

The composition comprises talc, wollastonite, clay or a combination thereof as a reinforcing filler. In some embodiments the composition comprises talc without wollastonite or clay. In a preferred embodiment the reinforcing filler comprises talc and/or wollastonite, the talc and/or wollastonite has an average particle size, d₅₀, of 2 to 8 micrometers. Within this range the average particle size can be greater than 3 micrometers. Also within this range the average particle can be less than or equal to 7 micrometers, or, more specifically, less than or equal to 6 micrometers. The average particle size, d₅₀, is the diameter above and below which in each case 50 wt. % of the particles lie. Mixtures of talc and/or wollastonite which differ in their average particle size d₅₀ can also be employed as long as the total average particle size meets the necessary criteria.. The d₅₀ value of the talc can be determined by measuring the particle size distribution with a Sedigraph 5100 (Micromeritics GmbH, Erftstrasse 43, 41238 Monchengladbach, Germany).

The reinforcing filler can be present in an amount of 10 to 30 weight percent, based on the total weight of the composition. Within this range the amount of reinforcing filler can be greater than or equal to 15 weight percent. Also within this range the amount of reinforcing filler can be less than or equal to 25 weight percent.

The composition can further comprise an electrically conductive filler. Exemplary electrically conductive fillers include carbon black, carbon nanofibers, carbon fibers and carbon nanotubes. These materials are commercially available and sold under a variety of trade names, including but not limited to S.C.F. (Super Conductive Furnace), E.C.F. (Electric Conductive Furnace), Ketjen Black EC (available from Akzo Co., Ltd.), acetylene black, NC7000 (Nanocyl), Plasticyl CNT/nylon masterbatches (Nanocyl); Graphistrength CNT/nylon masterbatches (Arkema), and Fibril nanotube/nylon based masterbatches (Hyperion). In some embodiments the electrically conductive filler consists of carbon black.

The electrically conductive filler can be present in an amount of 0.5 to 3 weight percent, based on the total weight of the composition. Within this range the amount of electrically conductive filler can be greater than or equal to 0.7, or, greater than or equal to 1.0. Also within this range the amount of electrically conductive filler can be less than or equal to 2.5, or less than or equal to 2.0.

The composition can further comprise an impact modifier. Particularly suitable thermoplastic impact modifiers are block copolymers, for example, A-B diblock copolymers and A-B-A triblock copolymers having of one or two alkenyl aromatic blocks A, which are typically styrene blocks, and a rubber block, B, which is typically an isoprene or butadiene block. The butadiene block may be partially hydrogenated. Mixtures of these diblock and triblock copolymers are especially useful.

Suitable A-B and A-B-A copolymers include but are not limited to polystyrene-polybutadiene, polystyrene-poly(ethylene-propylene), polystyrene-polyisoprene, poly(α-methylstyrene)-polybutadiene, polystyrene-polybutadiene-polystyrene (SBS), polystyrene-poly(ethylene-propylene)-polystyrene, polystyrene-polyisoprene-polystyrene and poly(alpha-methylstyrene)-polybutadiene-poly(alpha-methylstyrene), as well as the selectively hydrogenated versions thereof, and the like. Mixtures of the aforementioned block copolymers are also useful. Such A-B and A-B-A block copolymers are available commercially from a number of sources, including Phillips Petroleum under the trademark SOLPRENE, Shell Chemical Co., under the trademark KRATON, Dexco under the trademark VECTOR, and Kuraray under the trademark SEPTON.

The impact modifier can be present in an amount of 3 to 15 weight percent, based on the total weight of the composition. Within this range the amount of impact modifier can be greater than or equal to 4 weight percent. Also within this range the amount of impact modifier can be less than or equal to 10 weight percent.

The composition can, optionally, further comprise one or more other additives known in the thermoplastics arts. Useful additives include, for example, stabilizers, mold release agents, processing aids, drip retardants, nucleating agents, dyes, pigments, colorants, crystallization nucleators, metal salts, antioxidants, anti-static agents, plasticizers, lubricants, blowing agents, metal deactivators, antiblocking agents, nanoclays, fragrances (including fragrance-encapsulated polymers), and the like, and combinations thereof. Additives can be added in amounts that do not unacceptably detract from the desired performance and physical properties of the composition. Such amounts can be determined by a skilled artisan without undue experimentation. Generally, the total amount of additives will be less than or equal to 5 weight percent based on the total weight of the composition.

The composition can, optionally, exclude any polymer other than those taught herein as required.

A specific embodiment of the composition is shown in Table 1.

**Table 1**

| | |
|---|---|
| PPE (as described in Table 2) | 22.5 |
| Citric Acid | 0.7 |
| Impact modifier | 5.9 |
| Antioxidants | 0.5 |
| Polyphthalamide/aliphatic polyamide copolymer | 22.1 |
| Polyamide 66 | 28 |
| Talc | 19.1 |
| Carbon Nanotubes | 1.2 |

Another specific embodiment of the composition is shown in Table 2.

**Table 2**

| | |
|---|---|
| PPE (as described in Table 3) | 25.9 |
| Citric Acid | 0.7 |
| Impact modifier | 5.5 |
| Antioxidants | 0.2 |
| Polyphthalamide/aliphatic polyamide copolymer | 26.0 |
| Polyamide 66 | 22 |
| Talc | 18 |
| Carbon black | 1.7 |

The composition can be prepared using various techniques, including batch or continuous techniques that employ kneaders, extruders, mixers, and the like. For example, the composition can be formed as a melt blend employing a twin-screw extruder. In some embodiments at least some of the components are added sequentially. For example, the poly(phenylene ether) and functionalizing agent may be added to the extruder at the feed throat or in feeding sections adjacent to the feed throat, while the polyphthalamide/aliphatic polyamide copolymer and polyamide 66 rmay be added to the extruder in a subsequent feeding section downstream. When a functionalized poly(phenylene ether) is used the functionalized poly(phenylene ether) may be added to the extruder at the feed throat or in feeding sections adjacent to the feed throat, while the polyphthalamide/aliphatic polyamide copolymer and polyamide may be added to the extruder in a subsequent feeding section downstream. A vacuum system may be applied to the extruder, prior to the second sequential addition, to generate a sufficient vacuum to lower the residual levels of non-reacted functionalizing agent and any other volatile materials. In an alternative embodiment, the sequential addition of the components may be accomplished through multiple extrusions. A composition may be made by preextrusion of selected components, such as the poly(phenylene ether) and the functionalizing agent to produce a pelletized mixture. A second extrusion may then be employed to combine the preextruded components with the remaining components. The extruder may be a two lobe or three lobe twin screw extruder. The talc, wollastonite, clay or combination thereof is preferably mixed with polyamide 66 to form a masterbatch prior to forming the composition. Similarly, the electrically conductive filler can also be combined with polyamide 66 to form a masterbatch.

The composition can be used to make articles such as vehicular body parts such as tank filler flaps and fenders.

In some embodiments the article comprises a composition as described above. The article has a show surface and an underside surface opposite the show surface. The show surface can have a length of 10 to 30 centimeters (cm) and a width of 10 to 20 cm. The article can have a thickness of 0.2 to 0.4 cm. The show surface comprises a first coating. The underside surface may also be coated with a second coating as long as the thickness of the second coating is less than or equal to half of the thickness of the first coating. The coating may comprise any paint or coating material for use on thermoplastic body parts. The first coating may have a thickness of 10 to 60 micrometers.

### EXAMPLES

The examples used the materials described in Table 3 and in the following paragraphs.

**Table 3.**

| **Component** | **Grade** | **Supplier** | **Description** |
|---|---|---|---|
| PPE | PPO® 803 | Sabic Innovative Plastics, US LLC | Poly(2,6-dimethyl-1,4-phenylene)ether with an intrinsic viscosity of 0.4 dl/g. |
| SEBS | Kraton G1651 | Kraton Polymers | Impact modifier |
| Citric Acid | Citric Acid | Jungbunzlauer | Citric Acid - functionalizing agent |
| Anti-oxidant | Irganox 1010 | CIBA | Heat Stabilizer |
| Anti-oxidant | Irganox 1098 | CIBA | Heat Stabilizer |
| Anti-oxidant | Seenox 4125 | | Heat Stabilizer |
| PA 66 | 24FE1 | Rhodia | Polyamide 66 |
| CCB | Ketjenblack EC600 | AKZO | Conductive carbon black |
| Polyphthalamide/aliphatic polyamide copolymer | Radipol XT45 | Radici | Polyphthalamide/polyamide 66 copolymer having a Tg of 88 °C amd a Tm of 280°C |
| Polyphthalamide copolymer | Zytel HTN501 | DuPont | Polyphthalamide described as below and having a Tg of 125°C and a Tm of 305°C |
| CNT MB | MB4620-00 | Hyperion Catalysis | Carbon nanotube masterbatch; 20 weight percent carbon nanotubes and 80 weight percent polyamide 66. |
| Talc MB | | Clariant | Talc masterbatch; 45 weight percent talc and 55 weight percent polyamide 66. The talc has a d₅₀ of 5 micrometers |

Polyphthalamide/aliphatic polyamide copolymer, Radipol XT45, is a copolymer comprising repeating units of formula (I) 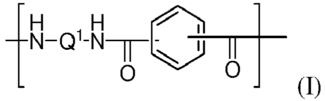 wherein Q¹ is a 1,6-hexyl group and the aromatic portion of the repeating unit is derived from terephthalic acid, and of formula (II) 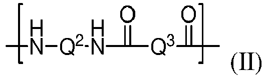 wherein Q² is a 1,4-butyl group and Q³ is a 1,6-hexyl group.

The examples were made by melt blending the poly(phenylene ether), citric acid, impact modifier, and stabilizers to form a first melt mixture and melt mixing the first melt mixture with polyamide 66, and talc masterbatch. In examples containing carbon nanotubes the carbon nanotube masterbatch was added at this point. In examples containing conductive carbon black, the conductive carbon black masterbatch was added after the first melt mixture was melt blended with the polyamide 66 and talc masterbatch. Melt blending was performed in a 28 millimeter Werner Pfleider twin screw extruder. The extruder for the examples without polyphthalamide/aliphatic polyamide copolymer was set with barrel temperatures of 270-300°C and a die temperature of 310°C, with the screw rotating at 300 rotations per minute (rpm) and a rate of about 10 kilograms per hour. The extruder for the examples containing polyphthalamide/aliphatic polyamide copolymer was set with barrel temperatures of 290-320°C and a die temperature of 330°C, with the screw rotating at 300 rotations per minute (rpm) and a rate of about 10 kilograms per hour. The amounts of the components of the compositions are shown in Table 4. Amounts are in weight percent based on the total weight of the compositions.

**Table 4.**

| | 1* | 2* | 3 |
|---|---|---|---|
| PPE | 25.9 | 22.5 | 22.5 |
| SEBS | 5.5 | 5.9 | 5.9 |
| CA | J.7 | 0.7 | J.7 |
| Irganox 1010 | - | 0.3 | J.3 |
| Irganox 1098 | 0.1 | 0.1 | 0.1 |
| Seenox 4125 | 0.1 | 0.1 | 0.1 |
| PA 66 | 26 | 22.1 | - |
| Polyphthalamide I | - | - | 22.1 |
| CNT masterbatch | - | 5.9 | 5.9 |
| Talc masterbatch | 40 | 42.4 | 42.4 |
| CCB | 1.7 | - | - |
| Tensile chord modulus (Megapascals) | 4200 | 4400 | 4400 |
| Tensile elongation at break (percent) | 4 | 7 | 7 |
| Flexural modulus (Megapascals) | 4000 | 4350 | 4300 |
| Flexural stress (Megapascals) | 110 | 105 | 110 |
| Notched Izod at 23 degrees C (kiloJoules/ square meter) | 4 | 4 | 5 |
| Notched Izod at -20 degrees C (kilojoules/square meter) | 4 | 4 | 5 |
| Vicat (degrees Celsius) | 195 | 195 | 200 |
| Melt Viscosity (Pascal seconds) | 190 | 190 | 200 |
| SVR | C | C | NC |

| | | | |
|---|---|---|---|
| *Comparative Example | | | |

The compositions were molded and tested. Testing methods are shown in Table 5. The Examples were tested for specific volume resistivity (SVR). The compositions were injection molded into ISO tensile bars. The bars were scored at a location 25 millimeters from the center of the bar on each side and then submerged in liquid nitrogen for approximately 5 minutes. As soon as the bars were removed from the liquid nitrogen they were snapped at the score marks for a brittle break. The ends were painted with electrically conductive silver paint and dried. Resistance was measured by placing the probes of a handheld multimeter on each painted end of the bar. The multimeter used was a Mastech M92A multimeter. The resistivity was calculated as the resistance (in Ohms) x bar width (in centimeters (cm)) x bar depth (cm) divided by the bar length (cm). Examples with an SVR less than 2000 kilo Ohms centimeter were classified as Conductive ("C" in Table 6). Examples with an SVR greater than 2000 kilo Ohms centimeter were classified as NonConductive ("NC" in Table 6).

In addition to SVR and the testing methods shown in Table 5, 17x17x0.3 cm molded placques were painted on one side or two sides using an automotive quality paint. The painted placques were then brought into contact with water on one side in at room temperature. Deformation was measured at the time intervals shown in Figures 1 and 2. Deformation was measured by placing a placque on a flat surface and measuring the maximum distance between the flat surface and the placque. The deformation is further shown by the photograph in Figure 3. In this photograph the placques had been exposed to water for 200 hours. Moisture uptake of the placques was also measured. The placques were weighed and the increase in weight due to water exposure was expressed as a percentage of the original weight (weight prior to water exposure). The moisture uptake is shown in Figures 4 and 5. The figures show that Examples 1-3 have very similar moisture uptake yet the comparative examples (1 and 2) show much greater deformation than the inventive example (3).

**Table 5**

| Test Name | Method |
|---|---|
| Notched Izod | ISO 180 |
| Flexural Modulus | ASTM |
| | D3763 |
| Flexural Stress | ISO178 |
| Vicat softening temperature | ISO306 |
| Melt viscosity at 282°C and 1500 cm⁻¹ | ISO11443 |
| Chord Modulus | ISO 527 |
| Stress @ Break | ISO 527 |
| Strain @ Break | ISO 527 |

### EXAMPLE 4

Example 4, which is a comparative example, was made as described above with regard to Example 3, with the exception that the polyphthalamide/aliphatic copolymer was replaced with an equal amount of a polyphthalamide copolymer. The polyphthalamide copolymer comprises repeating units in the following amounts: (a) 45-55 mol% of units of formula (I) 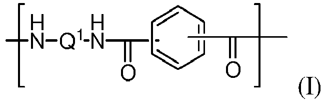 wherein Q¹ is a 1,6-hexyl group and the aromatic portion of the repeating unit is derived from terephthalic acid, and (b) 45-55 mol% of units of formula (I) wherein Q¹ is a 2-methyl-1,5-pentyl group and the aromatic portion of the repeating unit is derived from terephthalic acid. The amounts and structure of the repeating units was determined using nuclear magnetic resonance spectroscopy. The resulting composition could not be molded into placques.

### EXAMPLES 5-10

The examples were made and tested as described above with regard to Examples 1-3 with the exception that Examples 5-10 were not tested for deformation. The amounts of the components of the compositions are shown in Table 6. Amounts are in weight percent based on the total weight of the compositions.

**Table 6.**

| | 5 | 6 | 7 | 8 | 9 | 10 |
|---|---|---|---|---|---|---|
| PPE | 21.4 | 20.9 | 25.9 | 26.7 | 26.4 | 21.4 |
| SEBS | 5.5 | 5.9 | 5.9 | 5.5 | 5.9 | 5.9 |
| CA | 0.7 | 0.7 | 0.7 | 0.7 | 0.7 | 0.7 |
| Irganox 1010 | - | 0.3 | 0.3 | - | 0.3 | 0.3 |
| Irganox 1098 | 0.1 | 0.1 | 0.1 | 0.1 | 0.1 | 0.1 |
| Seenox 4125 | 0.1 | 0.1 | 0.1 | 0.1 | 0.1 | 0.1 |
| Polyphthalamide I | 22.1 | 22.1 | 22.1 | 26 | 22.1 | 22.1 |
| CNT masterbatch | 6.5 | 7 | 7.5 | - | - | - |
| Talc masterbatch | 40 | 42.4 | 42.4 | 40 | 42.4 | 42.4 |
| CCB | 1.7 | - | - | 1.7 | 1.7 | 2 |
| Tensile chord modulus (Megapascals) | 4300 | 4400 | 4400 | 4100 | 4200 | 4300 |
| Tensile elongation at break (percent) | 6.3 | 4.7 | 4.9 | 2.5 | 3.1 | 2.9 |
| Flexural modulus (Megapascals) | 3900 | 4000 | 3900 | 3800 | 3910 | 4000 |
| Flexural stress (Megapascals) | 104 | 105 | 100 | 100 | 102 | 103 |
| Notched Izod at 23 degrees C (kiloJoules/ square meter) | 5.3 | 5.3 | 5.5 | 4.6 | 4.5 | 4.5 |
| Notched Izod at -20 degrees C (kilojoules/square meter) | 3.3 | 3.4 | 3.3 | 2.6 | 2.8 | 2.5 |
| Vicat (degrees Celsius) | 206 | 205 | 204 | 206 | 206 | 206 |
| Melt Viscosity (Pascal seconds) | 171 | 178 | 169 | 185 | 177 | 189 |
| SVR | NC | NC | NC | C | C | C |

The invention is further demonstrated by the following embodiments.
Embodiment 1: A reinforced composition comprising: 70 to 90 weight percent (wt%) of a compatibilized blend of polyamide 66, a polyphthalamide/aliphatic polyamide copolymer and a poly(phenylene ether) wherein said compatibilized blend is formed from a mixture of the polyamide 66, polyphthalamide/aliphatic polyamide copolymer, polyphenylene ether, and a functionalizing agent; and 10 to 30 wt% of talc, wollastonite, clay or a combination thereof, wherein the polyphthalamide/aliphatic polyamide copolymer has a melting point of 270 to 290°C and a glass transition temperature of 75 to 95°C and the copolymer is present in an amount of 15 to 30 weight percent based on the total weight of the composition.
Embodiment 2: The reinforced composition of Embodiment 1, wherein the functionalizing group comprises citric acid, fumaric acid, maleic anhydride, or a combination thereof.
Embodiment 3: The reinforced composition of Embodiment 1 or 2, wherein the polyphthalamide/aliphatic polyamide copolymer comprises units of formula (I) 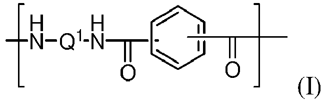 wherein Q¹ is a 1,6-hexyl group and units of formula (II) 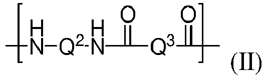 wherein Q² is a 1,6-hexyl group and Q³ is a 1,4-butyl group.
Embodiment 4: The reinforced composition of any of Embodiments 1 to 3, further comprising an impact modifier.
Embodiment 5: The reinforced composition of any of Embodiments 1 to 4, further comprising an electrically conductive filler.
Embodiment 6: The reinforced composition of Embodiment 5, wherein the electrically conductive filler consists of carbon black.
Embodiment 7: The reinforced composition of any of Embodiments 1 to 6, wherein the poly(phenylene ether) comprises 2,6-dimethyl-1,4-phenylene ether units.
Embodiment 8: The reinforced composition of any of Embodiments 1 to 7, wherein the composition has a melt viscosity greater than or equal to 190 Pascal seconds when determined at 282°C at 1500/cm.
Embodiment 9: The reinforced composition of any of Embodiments 1 to 8, wherein the composition comprises talc and/or wollastonite having an average particle size , d₅₀, of 2-8 micrometers.
Embodiment 10: The reinforced composition of Embodiment 9, wherein the composition comprises talc without wollastonite or clay.
Embodiment 11: A reinforced compatiblized composition comprising: 20 to 30 wt% of a polyphenylene ether; 15 to 30 wt% of a polyphthalamide/aliphatic polyamide copolymer having a melting point of 270 to 290 deg C and a glass transition temperature of 75 to 95 deg C; 25 to 35 wt% of a polyamide 66; and 10 to 30 wt% of talc.
Embodiment 12: The composition of Embodiment 11, further comprising an electrically conductive filler consisting of carbon black.
Embodiment 13: A reinforced compatibilized composition comprising 22 to 23 wt% of a polyphenylene ether; 5 to 6 wt% of an impact modifier; 27 to 30 wt% of a polyamide 66; and 20 to 22.5 wt% of a polyphthalamide/polyamide 66 copolymer, wherein the copolymer has a a melting point of 270 to 290°C and a glass transition temperature of 75 to 95°C, and 18 to 20 wt% of talc, having an average particle size, d₅₀, of 2 to 8 micrometers.
Embodiment 14: The composition of Embodiment 13, further comprising an electrically conductive filler consisting of conductive black.
Embodiment 15: An article comprising a reinforced composition wherein the composition comprises 70 to 90 weight percent (wt%) of a compatibilized blend of polyamide 66, a polyphthalamide/aliphatic polyamide copolymer and a poly(phenylene ether) wherein said compatibilized blend is formed from a mixture of the polyamide 66, polyphthalamide/aliphatic polyamide copolymer, polyphenylene ether, and citric acid, fumaric acid, maleic anhydride or a combination thereof; and 10 to 30 wt% of talc, wollastonite, clay or a combination thereof, wherein the polyphthalamide/aliphatic polyamide copolymer has a melting point of 270 to 290°C and a glass transition temperature of 75 to 95°C and the copolymer is present in an amount of 15 to 30 weight percent based on the total weight of the composition, wherein the article has a show surface having a first coating; an underside surface located opposite to the show surface; wherein the underside surface is uncoated or has a second coating which has a thickness which is less than half the thickness of the first coating.
Embodiment 16: An article comprising a reinforced compatiblized composition wherein the composition comprises 20 to 30 wt% of a polyphenylene ether; 15 to 30 wt% of a polyphthalamide/aliphatic polyamide copolymer having a melting point of 270 to 290 deg C and a glass transition temperature of 75 to 95 deg C; 25 to 35 wt% of a polyamide 66; and 10 to 30 wt% of talc, and wherein the article has a show surface having a first coating; an underside surface located opposite to the show surface; wherein the underside surface is uncoated or has a second coating which has a thickness which is less than half the thickness of the first coating.
Embodiment 17: An article comprising a reinforced compatibilized composition wherein the composition comprises 22 to 23 wt% of a polyphenylene ether; 5 to 6 wt% of an impact modifier; 27 to 30 wt% of a polyamide 66; and 20 to 22.5 wt% of a polyphthalamide/polyamide 66 copolymer, wherein the copolymer has a a melting point of 270 to 290°C and a glass transition temperature of 75 to 95°C; and 18 to 20 wt% of talc having an average particle size, d₅₀, of 2 to 8 micrometers, wherein the article has a show side having a first coating; an under sidelocated opposite the show surface; wherein the under side is uncoated or has a second coating which has a thickness which is less than half the thickness of the first coating.

In the specification and the claims, reference is made to a number of terms, which shall be defined to have the following meanings. The terms "first," "second," and the like, "primary," "secondary," and the like, "(a)," "(b)" and the like, as used herein do not denote any order, quantity, or importance, but rather are used to distinguish one element from another. The endpoints of all ranges directed to the same component or property are inclusive of the endpoint and independently combinable. Reference throughout the specification to "one embodiment," "another embodiment," "an embodiment," "some embodiments," and so forth, means that a particular element (e.g., feature, structure, property, and/or characteristic) described in connection with the embodiment is included in at least one embodiment described herein, and may or may not be present in other embodiments. In addition, it is to be understood that the described element(s) may be combined in any suitable manner in the various embodiments. The singular forms "a", "an" and "the" include plural referents unless the context clearly dictates otherwise. "Optional" or "optionally" means that the subsequently described event or circumstance may or may not occur, and that the description includes instances where the event occurs and instances where it does not.

## Claims

1. A reinforced composition comprising:
70 to 90 weight percent (wt%) of a compatibilized blend of polyamide 66, a polyphthalamide/aliphatic polyamide copolymer and a poly(phenylene ether) wherein said compatibilized blend is formed from a mixture of the polyamide 66, polyphthalamide/aliphatic polyamide copolymer, polyphenylene ether, and a functionalizing agent; and
10 to 30 wt% of talc, wollastonite, clay or a combination thereof,
wherein the polyphthalamide/aliphatic polyamide copolymer has a melting point of 270 to 290°C and a glass transition temperature of 75 to 95°C and the copolymer is present in an amount of 15 to 30 weight percent based on the total weight of the composition.

2. The reinforced composition of claim 1, wherein the functionalizing group comprises citric acid, fumaric acid, maleic anhydride, or a combination thereof.

3. The reinforced composition of claim 2, wherein the polyphthalamide/aliphatic polyamide copolymer comprises units of formula (I) 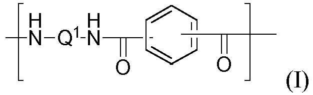 wherein Q¹ is a 1,6-hexyl group and units of formula (II) 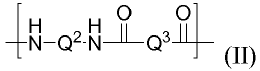 wherein Q² is a 1,6-hexyl group and Q³ is a 1,4-butyl group.

4. The reinforced composition of any of the preceding claims, further comprising an impact modifier.

5. The reinforced composition of any of the preceding claims, further comprising an electrically conductive filler.

6. The reinforced composition of claim 5, wherein the electrically conductive filler consists of carbon black.

7. The reinforced composition of any of the preceding claims, wherein the poly(phenylene ether) comprises 2,6-dimethyl-1,4-phenylene ether units.

8. The reinforced composition of any of the preceding claims, wherein the composition has a melt viscosity greater than or equal to 190 Pascal seconds when determined at 282°C at 1500/cm.

9. The reinforced composition of any of the preceding claims, wherein the composition comprises talc and/or wollastonite having an average particle size, d₅₀, of 2-8 micrometers.

10. The reinforced composition of claim 9, wherein the composition comprises talc without wollastonite or clay.

11. A reinforced compatiblized composition comprising:
20 to 30 wt% of a polyphenylene ether;
15 to 30 wt% of a polyphthalamide/aliphatic polyamide copolymer having a melting point of 270 to 290 deg C and a glass transition temperature of 75 to 95 deg C;
25 to 35 wt% of a polyamide 66;
10 to 30 wt% of talc.

12. The composition of claim 11, further comprising an electrically conductive filler consisting of carbon black.

13. A reinforced compatibilized composition comprising
22 to 23 wt% of a polyphenylene ether;
5 to 6 wt% of an impact modifier;
27 to 30 wt% of a polyamide 66; and
20 to 22.5 wt% of a polyphthalamide/polyamide 66 copolymer, wherein the copolymer has a a melting point of 270 to 290°C and a glass transition temperature of 75 to 95°C 18 to 20 wt% of talc, having an average particle size, d₅₀, of 2 to 8 micrometers.

14. The composition of claim 13, further comprising an electrically conductive filler consisting of conductive black.

15. An article comprising a reinforced composition according to claim 1, 11, or 13, wherein the article has
a show surface having a first coating;
an underside surface located opposite to the show surface;
wherein the underside surface is uncoated or has a second coating which has a thickness which is less than half the thickness of the first coating.

## Patentansprüche

1. Verstärkte Zusammensetzung, umfassend:
70 bis 90 Gewichtsprozent (Gew.-%) einer kompatibilisierten Mischung von Polyamid-66, einem Copolymer von Polyphthalamid/aliphatisches Polyamid und einem Poly(phenylenether), wobei die kompatibilisierte Mischung aus einem Gemisch des Polyamide-66, des Copolymers von Polyphthalamid/aliphatisches Polyamid, des Polyphenylenethers und einem Funktionalisierungsmittel gebildet ist; und
10 bis 30 Gew.-% Talk, Wollastonit, Ton oder einer Kombination davon,
wobei das Copolymer von Polyphthalamid/aliphatisches Polyamid einen Schmelzpunkt von 270 bis 290°C und eine Glasübergangstemperatur von 75 bis 95°C aufweist und das Copolymer in einer Menge von 15 bis 30 Gewichtsprozent, bezogen auf das Gesamtgewicht der Zusammensetzung, vorliegt.

2. Verstärkte Zusammensetzung nach Anspruch 1, wobei die Funktionalisierungsgruppe Citronensäure, Fumarsäure, Maleinsäureanhydrid oder eine Kombination davon umfasst.

3. Verstärkte Zusammensetzung nach Anspruch 1, wobei das Copolymer von Polyphthalamid/aliphatisches Polyamid Einheiten der Formel (I) 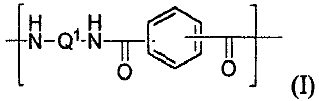 wobei Q¹ eine 1,6-Hexyl-Gruppe ist, und Einheiten der Formel (II) 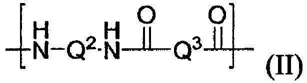 wobei Q² eine 1,6-Hexyl-Gruppe ist und Q³ einen,4-Butyl-Gruppe ist, umfasst.

4. Verstärkte Zusammensetzung nach irgendeinem der vorhergehenden Ansprüche, weiterhin umfassend einen Schlagzähmodifikator.

5. Verstärkte Zusammensetzung nach irgendeinem der vorhergehenden Ansprüche, weiterhin umfassend einen elektrisch leitenden Füllstoff.

6. Verstärkte Zusammensetzung nach Anspruch 5, wobei der elektrisch leitende Füllstoff aus Ruß besteht.

7. Verstärkte Zusammensetzung nach irgendeinem der vorhergehenden Ansprüche, wobei der Poly(phenylenether) 2,6-Dimethyl-1,4-phenylenether-Einheiten umfasst.

8. Verstärkte Zusammensetzung nach irgendeinem der vorhergehenden Ansprüche, wobei die Zusammensetzung eine Schmelzviskosität größer als oder gleich 190 Pascal-Sekunden bei Bestimmung bei 282°C bei 1500_{/}cm aufweist.

9. Verstärkte Zusammensetzung nach irgendeinem der vorhergehenden Ansprü= che, wobei die Zusammensetzung Talk und/oder Wollastonit mit einer durchschnittlichen Teilchengröße, d₅₀, von 2 bis 8 Mikrometer umfasst.

10. Verstärkte Zusammensetzung nach Anspruch 9, wobei die Zusammensetzung Talk ohne Wollastonit oder Ton umfasst.

11. Verstärkte kompatibilisierte Zusammensetzung, umfassend:
20 bis 30 Gew.-% eines Polyphenylenethers;
15 bis 30 Gew.-% eines Copolymers von Polyphthalamid/aliphatisches Polyamid mit einem Schmelzpunkt von 270 bis 290 Grad C und einer Glasübergangstemperatur von 75 bis 95 Grad C;
25 bis 35 Gew.-% eines Polyamid-66;
10 bis 30 Gew.-% Talk.

12. Zusammensetzung nach Anspruch 11, weiterhin umfassend einen elektrisch leitenden Füllstoff, der aus Ruß besteht.

13. Verstärkte kompatibilisierte Zusammensetzung, umfassend 22 bis 23 Gew.-% eines Polyphenylenethers;
5 bis 6 Gew.-% eines Schlagzähmodifikators;
27 bis 30 Gew.-% eines Polyamid-66; und
20 bis 22,5 Gew.-% eines Polyphthalamid/Polyamid-66-Copolymers, wobei das Copolymer einen Schmelzpunkt von 270 bis 290°C und eine Glasübergangstemperatur von 75 von 95°C aufweist,
18 bis 20 Gew.-% Talk mit einer durchschnittlichen Teilchengröße, d₅₀, von 2 bis 8 Mikrometer.

14. Zusammensetzung nach Anspruch 13, weiterhin umfassend einen elektrisch leitenden Füllstoff, der aus leitendem Ruß besteht.

15. Gegenstand, umfassend eine verstärkte Zusammensetzung gemäß Anspruch 1, 11 oder 13, wobei der Gegenstand
eine Schau-Oberfläche mit einer ersten Beschichtung;
eine gegenüberliegend zu der Schau-Oberfläche gelegene Unterseiten-Oberfläche aufweist;
wobei die Unterseiten-Oberfläche unbeschichtet ist oder eine zweite Beschichtung aufweist, die eine Dicke aufweist, die weniger als die Hälfte der Dicke der ersten Beschichtung beträgt.

## Revendications

1. Composition renforcée, comprenant :
70 à 90 pourcents en poids (%-p) d'un mélange compatibilisé de polyamide 66, d'un copolymère polyphtalamide/polyamide aliphatique et d'un poly(phénylène éther) dans laquelle ledit mélange compatibilisé est formé à partir d'un mélange du polyamide 66, du copolymère polyphtalamide/polyamide aliphatique, du poly(phénylène éther) et d'un agent de fonctionnalisation ; et
10 à 30 %-p de talc, de wollastonite, d'argile ou d'une combinaison de ceux-ci,
dans laquelle le copolymère polyphtalamide/polyamide aliphatique a un point de fusion de 270 à 290°C et une température de transition vitreuse de 75 à 95°C, et le copolymère est présent en une quantité de 15 à 30 pourcents en poids, par rapport au poids total de la composition.

2. Composition renforcée selon la revendication 1, dans laquelle le groupe de fonctionnalisation comprend de l'acide citrique, de l'acide fumarique, de l'anhydride maléique ou une combinaison de ceux-ci.

3. Composition renforcée selon la revendication 2, dans laquelle le copolymère polyphtalamide/polyamide aliphatique comprend des motifs de formule (I) 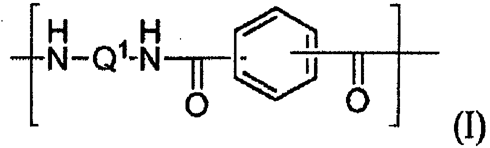 dans laquelle Q¹ est un groupe 1,6-hexyle, et des motifs de formule (II) 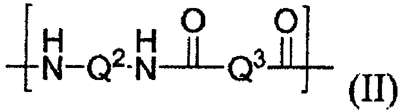 dans laquelle Q² est un groupe 1,6-hexyle et Q³ est un groupe 1,4-butyle.

4. Composition. renforcée selon l'une quelconque des revendications précédentes, comprenant en outre un modifiant choc.

5. Composition renforcée selon l'une quelconque des revendications précédentes, comprenant en outre une charge conductrice de l'électricité.

6. Composition renforcée selon la revendication 5, dans laquelle la charge conductrice de l'électricité consiste en noir de carbone.

7. Composition renforcée selon l'une quelconque des revendications précédentes, dans laquelle le poly(phénylène éther) comprend des motifs 2,6-diméthyl-1,4-phénylène éther.

8. Composition renforcée selon l'une quelconque des revendications précédentes, la composition ayant une viscosité à l'état fondu supérieure ou égale à 190 Pascal. secondes, quand elle est déterminée à 282°C à 1500/cm.

9. Composition renforcée selon l'une quelconque des revendications précédentes, la composition comprenant du talc et/ou de la wollastonite, ayant une granulométrie moyenne d₅₀ de 2 à 8 micromètres.

10. Composition renforcée selon la revendication 9, la composition comprenant du talc sans wollastonite ni argile.

11. Composition compatibilisée renforcée, comprenant :
20 à 30 %-p d'un poly(phénylène éther) ;
15 à 30 %-p d'un copolymère polyphtalamide/polyamide aliphatique ayant un point de fusion de 270 à 290 degrés C et une température de transition vitreuse de 75 à 95 degrés C ;
25 à 35 %-p d'un polyamide 66 ;
10 à 30 %-p de talc.

12. Composition selon la revendication 11, comprenant en outre une charge conductrice de l'électricité consistant en noir de carbone.

13. Composition compatibilisée renforcée, comprenant 22 à 23 %-p d'un poly(phénylène éther) ;
5 à 6 %-p d'un modifiant choc ;
27 à 30 %-p d'un polyamide 66 ; et
20 à 22,5 %-p d'un copolymère polyphtalamide/polyamide 66, le copolymère ayant un point de fusion de 270 à 290°C et une température de transition vitreuse de 75 à 95°C ;
18 à 20 %-p de talc, ayant une granulométrie moyenne d₅₀ de 2 à 8 micromètres.

14. Composition selon la revendication 13, comprenant en outre une charge conductrice de l'électricité consistant en un noir conducteur.

15. Article comprenant une composition renforcée selon la revendication 1, 11 ou 13, l'article ayant
une surface visible ayant un premier revêtement ;
une sous-face disposée opposée à la surface visible ;
dans lequel la sous-face est non revêtue ou possède un deuxième revêtement qui a une épaisseur inférieure à la moitié de l'épaisseur du premier revêtement.
